# EUROPEAN PATENT SPECIFICATION

(11) **EP 3 754 802 B1**
(45) Date of publication and mention of the grant of the patent: **14.06.2023**
(21) Application number: 20180931.6
(22) Date of filing: 18.06.2020
(51) Int. Cl.: H02G 11/00, B65H 75/36, F21V 21/35, F21V 27/00

(54) **A RETRACTABLE CABLE MANAGEMENT DEVICE**
EINZIEHBARE KABELVERWALTUNGSVORRICHTUNG
DISPOSITIF DE GESTION DE CÂBLE RÉTRACTABLE

(30) Priority: 21.06.2019 CN 201910546480
(43) Date of publication of application: 23.12.2020
(73) Proprietor: Self Electronics Co., Ltd., Ningbo 315103 (CN); SELF ELECTRONICS Germany GmbH, 51149 Köln (DE); Lin, Wanjiong, Ningbo 315103 (CN)
(72) Inventor: Fang, Lei, Ningbo 315103 (CN); Dong, Jianguo, Ningbo 315103 (CN); Xu, Kai, Ningbo 315103 (CN); Yang, Jun, Ningbo 315103 (CN)
(74) Representative: 2K Patentanwälte Blasberg Kewitz & Reichel

(56) References cited:
- EP-A1- 2 813 455
- JP-A- H10 310 332
- JP-A- 2008 270 513
- JP-A- 2017 199 889
- JP-U- S53 104 262

## Description

### FIELD OF THE TECHNOLOGY

The present invention relates to the field of lighting technology, in particular to a retractable cable management device (wire regulator).

### BACKGROUND OF THE INVENTION

When installing lamps on the shelves of supermarkets, shopping malls, etc., the power supply cable needs to be led out from the back of the shelf, and then routed along the side bracket under the layer board and then connected to the lamps. The power supply cable is mainly fixed on the layer board bracket by a cable buckle with magnet.

In the prior art, the width of the shelf layer board needs to be adjusted from time to time, which leads to changes in the installation position of the lamp or lighting fixture, and then the length of the cable must also be adjusted to meet the requirements of the installation position of the lamp or lighting fixture, which will increase the workload of the cable management at the same time. Because in the existing design the power supply cable is exposed, a certain length needs to be reserved during installation for subsequent adjustments and installation, which affects the appearance.

JP 353104262 U discloses a retractable cable management device according to the preamble of claim 1. The cable extends from a first port at a first side of a housing to a second port at an opposite second side of the housing, and extends in an S-shaped manner around a pulley that is rotatably mounted at a vertical post that extends through a longitudinal slot 5 provided in an upper surface of the housing. For varying the extending length of the cable outside the housing, the longitudinal position of the vertical post can be varied by sliding in the longitudinal slot. If at all, the longitudinal position of the cable is fixed by a hooking-mechanism.

JP 2017199889 A discloses another retractable cable management device, comprising a housing that has an input port at a first side and an output port at an opposite second side of the housing. The cable is stored inside the housing by loosely winding along the inner peripheral wall of the housing. Rollers are supported inside the housing for winding-up the cable inside the housing, and the rollers are rotatably supported in grooves of corresponding shape. The housing does not comprise a longitudinal slot.

JP 410310332 A discloses another retractable cable management device, wherein the cable extends from one of the ports at a first side of the housing to another port at an opposite side of the housing, and is wound in an S-shaped manner around the posts, which extend through longitudinal slots provided in an upper surface of the housing. The longitudinal position of the posts can be varied, which will result in a change of the S-shaped course of the cable and in a change of the total external length of the cable outside the housing. A partition inside the housing is not disclosed.

JP 2008270513 A discloses another retractable cable management device. The cable is not guided in an S-shape through the housing. A tightening mechanism embodied as a fastening knob that can be loosened / tightened by threading is not disclosed.

### BRIEF SUMMARY OF THE INVENTION

In view of the above problems, it is an object of the present invention to provide a retractable cable management device (wire regulator) that can be adjusted in length according to changes in the width of the shelf and the position of the lamp or lighting fixture, and is convenient to operate and has a beautiful appearance.

This problem is solved by a retractable cable management device as claimed by claim 1. Further advantageous embodiments are the subject-matter of the dependent claims.

According to the present invention there is provided a retractable cable management device (wire regulator), comprising a strip-shaped housing and a sliding device, wherein the housing is provided with an opening formed (extending) along the length direction of the housing, an input cable is provided at one end of the housing, an output cable is provided at other end of the housing and the two ends of the housing are provided with closed end covers; wherein one end of the sliding device extends into the housing through the opening and is electrically connected to the input cable and the output cable; the sliding device can slide along the length direction of the opening and the extension length of the output cable relative to the housing changes accordingly during sliding.

According to the present invention the housing is provided with a partition formed along the length direction of the housing, wherein the partition divides the cavity of the housing into an upper cavity and a lower cavity, the opening is provided in the lower cavity portion, the input cable extends from the upper cavity to the other end of the housing and is connected to the output cable as a whole, and the bent portion of the output cable at the other end of the housing connected to the input cable is fixed in the end cover by abutting the corresponding end of the partition, wherein the sliding device is a tightening mechanism with one end inserted into the opening and the other end exposed outside the housing and comprising a limit post that can move along the length direction of the opening and a fastening knob that is threaded to the limit post and has a nut located outside the housing, wherein the moving position of the tightening mechanism relative to the opening can be adjusted by loosening and tightening the fastening know to change the fixed tightness between the tightening mechanism and the housing, and then the length of the output cable extending out of the housing can be changed.

Advantageously, the input cable is electrically connected to the limit post and one end of the output cable located in the housing is fixed relative to other end of the housing after bypassing the limit post; and wherein, when the fastening knob is loosened, the tightening mechanism can drive the surrounding output cable to move along the length direction of the opening to change the length of the output cable extending out of the housing, and wherein , when the fastening knob is tightened, the tightening mechanism is fixed relative to the opening.

Advantageously, the limit post comprises a first section located in the housing and a second section located in the opening, wherein the cross-sectional area of the second section is smaller than the cross-sectional area of the first section to form a step, and a side surface of the second section is a plane in contact with the opening.

Advantageously, the length of the second section is less than the thickness of the housing at the opening, so that when the fastening knob is tightened, the side wall of the opening is clamped between the stepped surface of the step and the nut of the fastening knob.

Advantageously, the periphery of the first section comprises a sleeve with a concave periphery surface, and the output cable is disposed around the concave surface of the sleeve.

Advantageously, the sleeve is rotatably connected with the first section.

Advantageously, a magnetic block is provided on the end cover and the housing is fixed on the to-be-installed surface by means of the magnetic block.

Advantageously, a cable buckle is sleeved on the output cable.

Compared with the prior art, the advantage of the present invention is that: the previously exposed power supply cables that need to be reserved for a certain length are replaced by telescopic power supply rails applicable to different shelf widths, When installing the lamp, by adjusting the sliding device of the power supply rail, the extended length of the output cable can be changed relative to the power supply rail, so as to meet the different length requirements of the power supply cable, which avoids the troublesome problem of conventional cable management and makes the operation very convenient. Most of the cables are located inside the power supply rail, which makes the whole device neat and beautiful.

### BRIEF DESCRIPTION OF THE DRAWINGS

FIG. 1 is a schematic structural diagram of an embodiment of an retractable cable management device of the present invention.
FIG. 2 is a schematic diagram of the explosion structure of FIG. 1.
FIG. 3 is a schematic cross-sectional structure diagram of FIG. 1.

### DETAILED DESCRIPTION OF THE INVENTION

Hereinafter, specific embodiments of the present invention will be described in further detail based on the drawings. It should be understood that the description of the embodiments of the present invention is not intended to limit the protection scope of the present invention.

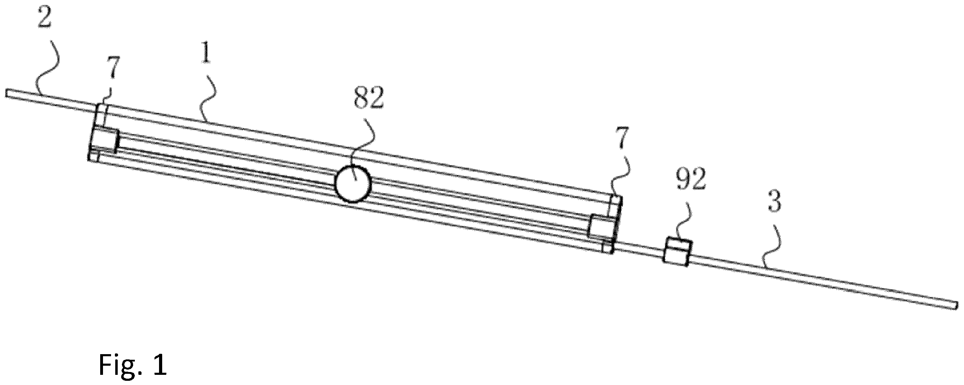

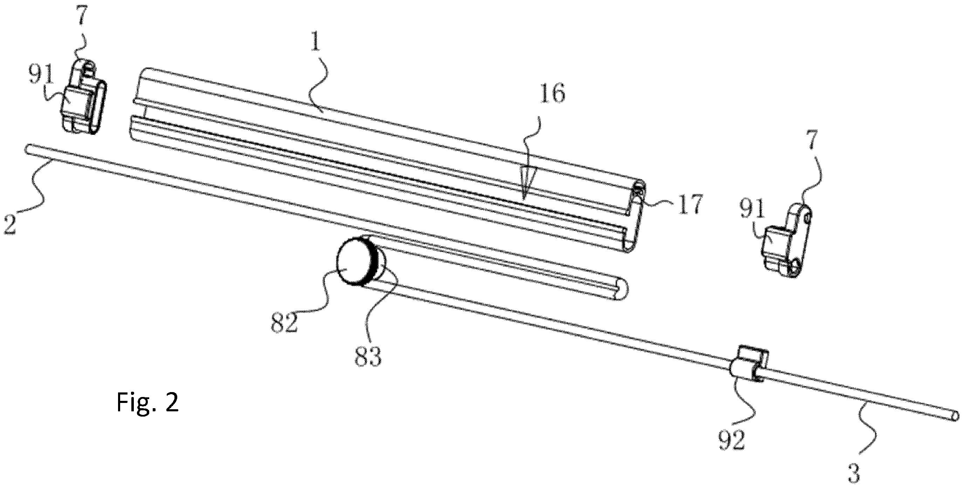

As shown in FIG 1 to 3, the retractable cable management device comprises a strip-shaped housing 1 and a sliding device. The housing 1 is provided with an opening 16 extending along the length direction of the housing 1. One end of the housing 1 is provided with an input cable 2 while the other end is provided with an output cable 3. One end of the sliding device dips (extends) into the housing 1 through the opening 16 and is electrically connected to the input cable 2 and the output cable 3. The sliding device can slide along the length direction of the opening 16. During the sliding process, the extension length of the output cable 3 relative to the housing 1 is changed accordingly. In this way, when installing lamps in shelves with different widths, it is only necessary to adjust the sliding device so that the extension length of the output cable 3 relative to the housing 1 changes correspondingly, which can meet the requirements of lamp installation in the shelves and is very convenient to use.

More specifically, the sliding device is a tightening mechanism with one end inserted into the opening 16 and the other end exposed outside the housing 1. By changing the fixed tightness between the tightening mechanism and the housing 1, the moving position of the tightening mechanism relative to the opening 16 can be adjusted, so that the length of the output cable 3 extending out of the housing 1 can be changed.

As shown in Figs. 1 to 3, the tightening mechanism includes a limit post 81 that can move along the length direction of the opening 16, and a fastening knob 82 that is threaded to the limit post 81 and has a nut located outside the housing. The input lead 2 is electrically connected to the limit post 81 and the output cable 3 located in one end of the housing 1 is fixed relative to the other end of the housing 1 after bypassing the limit post 81. When the fastening knob 82 is loosened, the tightening mechanism can drive the surrounding output cable 3 to move along the length direction of the opening 16 to change the length of the output cable 3 extending out of the housing 1, and when the fastening knob 82 is tightened, the tightening mechanism is fixed relative to the opening 16.

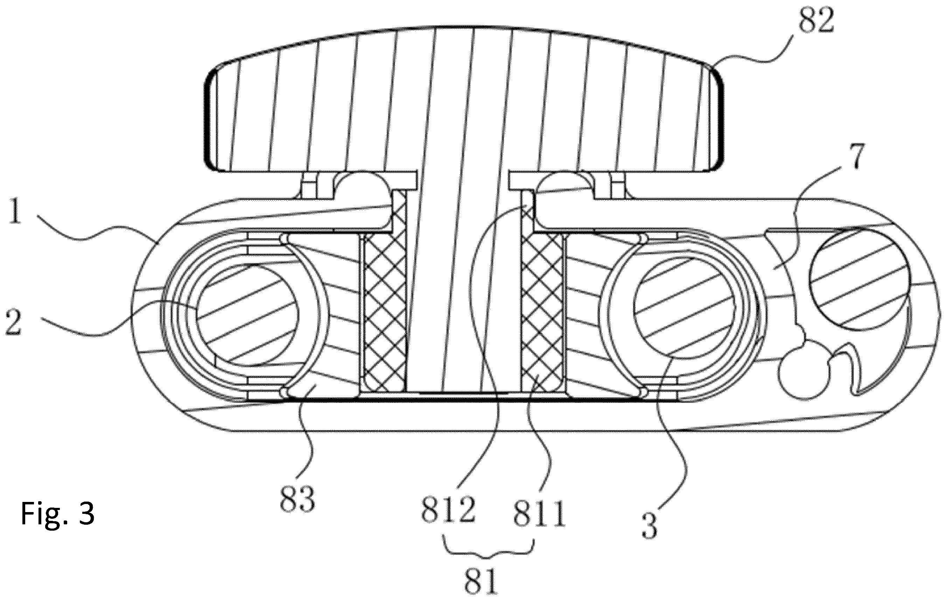

Please refer to FIG. 3 together. The limit post 81 includes a first section 811 located in the housing 1 and a second section 812 located in the opening 16. The cross-sectional area of the second section 812 is smaller than the cross-sectional area of the first section 811 to form a step. The side surface of the second section 812 is a plane in contact with the opening 16 to limit the circumferential rotation of the limit post 81. The cross section of the second section 812 is square, and the output cable 3 is arranged in a U-shape around the limit post 81 in the housing 1.

When the fastening knob 82 is loosened, the sliding device, that is, the tightening mechanism, can move along the length direction of the opening 16, because the output cable 3 is disposed around the limit post 81. Therefore, when the limit post 81 moves, the output cable 3 will also move synchronously along the length direction of the opening 16 with the drive of limit post 81. Thus, the length of the output cable 3 extending out of the housing 1 is adjusted by adjusting the distance between the tightening mechanism and the other end of the housing 1. When the fastening knob 82 is fixed, the sliding device, that is, the tightening mechanism, is fixed relative to the opening 16, thereby fixing the extension length of the output cable 3.

In this embodiment, the length of the second section 812 is less than the thickness of the housing 1 at the opening 16, so that when the fastening knob 82 is tightened, the side wall of the opening 16 is clamped between the stepped surface of the step and the nut of the fastening knob 82 to fix the limit post 81 and the fastening knob 82 relative to the length direction of the opening 16. Of course, the tightening method of the fastening knob 82 can also be designed in other forms. For example, the assembly hole disposed on the limit post 81 which is in threaded connection with the screw of the fastening knob 82 is a through hole, the length of the screw is longer than the depth of the through hole. When the fastening knob 82 is tightened, the free end of the screw of the fastening knob 82 abuts against the wall of the housing 1, and the stepped surface of the limit post 81 abuts against the inner wall of the housing 1 at the opening 16, so that the limit post 81 and the fastening knob is fixed relative to the length direction of opening 16.

In this embodiment, the periphery of the first section 811 is also sleeved with a sleeve 83 with a concave periphery surface, the output cable 3 is disposed around the concave surface of the sleeve 83, and the periphery of the sleeve 83 adopts smooth cambered surface. In this way, when adjusting the extension length of the output cable 3, on the one hand, it can avoid the output cable 3 slipping to both ends of the first section 811 and getting stuck; on the other hand, it can reduce the friction between output cable 3 and sleeve 83, reduce the wear of the outer insulation layer of output cable 3, and increase the service life of output cable 3. As a preferred method, the sleeve 83 is rotatively connected with the first section 811, so as to further reduce the friction between the output cable 3 and the sleeve 83. Of course, the rotary connection between the sleeve 83 and the first section 811 can be designed in various different forms. For example, the sleeve 83 may be directly sleeved outside the first section 811 of the limit post 81, or a bearing may be provided between the sleeve 83 and the first section 811 of the limit post 81, just like a movable pulley. Thus, it is easy to operate and labor-saving, and is conducive to further reduce the friction of the output cable 3.

In this embodiment, the housing 1 is provided with a partition 17 formed along the length direction of the housing 1. The partition 17 divides the cavity of the housing 1 into an upper cavity and a lower cavity, and the opening 16 is provided in the lower cavity. The input cable 2 extends from the upper cavity to the other end of the housing 1 and is connected to the output cable 3 as a whole. The two ends of the housing 1 are also provided with closed end covers 7, and the bent portion of the output cable 3 at the other end of the housing 1 connected to the input cable 2 is fixed in the end cover 7 by abutting the end of the partition 17. In this way, no other fixing device is needed, which saves material.

Since most of the existing shelves use iron shelves, in order to facilitate the fixing of the power supply rail, a magnetic block 91 is provided on the end cover 7, and the housing 1 is adsorbed and fixed on the to-be-installed surface of the shelf by means of the magnetic block 91. Of course, it is conceivable that the magnetic block 91 can also be provided on the housing 1. If the power supply rail of the present application is used on non-ferrous shelves, such as wooden shelves, etc., the power supply track can be fixed by bonding, screw connection, or other fixing methods.

In this application, in order to avoid the output cable 3 protruding too long relative to the housing 1 and sagging, the output cable 3 is provided with a cable buckle 92, which is fixed with the installation surface by means of magnetic attraction, etc. Of course, a cable buckle 92 can also be provided on the input cable 2.

It should be noted that the power supply rail of the present application can be applied not only to the installation of shelf lamps, but also to exhibition cabinets, home furnishing and other applications. It is not only applicable to the installation of lamps, but also to the installation and collection of other electrical equipment.

The above disclosure has been described by way of example and in terms of exemplary embodiment, and it is to be understood that the disclosure is not limited thereto. The scope of the invention as set forth in the appended claims.

## Claims

1. A retractable cable management device, comprising a strip-shaped housing (1) and a sliding device; wherein
the housing (1) is provided with an opening (16) formed along the length direction of the housing (1), an input cable (2) is provided at one end of the housing (1), an output cable (3) is provided at the other end of the housing (1), and the two ends of the housing (1) are provided with closed end covers (7); and
one end of the sliding device extends into the housing (1) through the opening (16) and is electrically connected to the input cable (2) and the output cable (3); wherein
the sliding device can slide along the length direction of the opening (16) and the extension length of the output cable (3) relative to the housing (1) changes accordingly during sliding;
wherein the sliding device is a tightening mechanism with one end inserted into the opening (16), the other end exposed outside the housing (1) and comprising a limit post (81) that can move along the length direction of the opening (16), **characterized by** a fastening knob (82) that is threaded to the limit post (81) and has a nut located outside the housing (1), wherein
the moving position of the tightening mechanism relative to the opening (16) can be adjusted by loosening and tightening the fastening knob (82) to change the fixed tightness between the tightening mechanism and the housing (1) so that the length of the output cable (3) extending out of the housing (1) can be changed, and
the housing (1) is provided with a partition (17) formed along the length direction of the housing (1),
the partition (17) divides the cavity of the housing (1) into an upper cavity and a lower cavity,
the opening (16) is provided in the lower cavity portion,
the input cable (2) extends from the upper cavity to the other end of the housing (1) and is connected to the output cable (3) as a whole, and
a bent portion of the output cable (3) at the other end of the housing (1) connected to the input cable (2) is fixed in the end cover (7) by abutting the corresponding end of the partition (17).

2. The retractable cable management device as claimed in claim 1, wherein
the input cable (2) is electrically connected to the limit post (81) and the one end of the output cable (3) located in the housing (1) is fixed relative to the other end of the housing (1) after bypassing the limit post (81); wherein
when the fastening knob (82) is loosened, the tightening mechanism can drive the surrounding output cable (3) to move along the length direction of the opening (16) to change the length of the output cable (3) extending out of the housing (1), and
when the fastening knob (82) is tightened, the tightening mechanism is fixed relative to the opening (16).

3. The retractable cable management device as claimed in claim 2, wherein
the limit post (81) comprises a first section (811) located in the housing (1) and a second section (812) located in the opening (16),
the cross-sectional area of the second section (812) is smaller than the cross-sectional area of the first section (811) to form a step, and
a side surface of the second section (812) is a plane in contact with the opening (16).

4. The retractable cable management device as claimed in claim 3, wherein the length of the second section (812) is less than the thickness of the housing (1) at the opening (16), so that when the fastening knob (82) is tightened, the side wall of the opening (16) is clamped between the stepped surface of the step and the nut of the fastening knob (82).

5. The retractable cable management device as claimed in claim 3, wherein the periphery of the first section (811) further comprises a sleeve (83) with a concave periphery surface, and the output cable (3) is disposed around the concave surface of the sleeve (83).

6. The retractable cable management device as claimed in claim 5, wherein the sleeve (83) is rotatably connected with the first section (811).

7. The retractable cable management device as claimed in any of the preceding claims, wherein a magnetic block (91) is provided on the end cover (7), and the housing (1) is fixable on the to-be-installed surface through the magnetic block (91).

8. The retractable cable management device as claimed in any of the preceding claims, wherein a cable buckle (92) is sleeved on the output cable (3).

## Patentansprüche

1. Einziehbare Kabelmanagementvorrichtung mit einem leistenförmigen Gehäuse (1) und einer Gleitvorrichtung umfasst; wobei
das Gehäuse (1) mit einer Öffnung (16) versehen ist, die entlang der Längsrichtung des Gehäuses (1) ausgebildet ist, wobei ein Eingangskabel (2) an einem Ende des Gehäuses (1) vorgesehen ist, ein Ausgangskabel (3) an dem anderen Ende des Gehäuses (1) vorgesehen ist, und die beiden Enden des Gehäuses (1) mit geschlossenen Endabdeckungen (7) versehen sind; und
ein Ende der Gleitvorrichtung sich durch die Öffnung (16) in das Gehäuse (1) hinein erstreckt und elektrisch mit dem Eingangskabel (2) und dem Ausgangskabel (3) verbunden ist; wobei
die Gleitvorrichtung entlang der Längsrichtung der Öffnung (16) verschiebbar ist und sich die Auszugslänge des Ausgangskabels (3) relativ zu dem Gehäuse (1) beim Verschieben entsprechend ändert;
wobei die Gleitvorrichtung ein Straffmechanismus ist, der mit einem Ende in die Öffnung (16) eingesetzt ist, mit dem anderen Ende außerhalb des Gehäuses (1) freiliegt und eine in Längsrichtung der Öffnung (16) verschiebbare Begrenzungssäule (81) aufweist, **gekennzeichnet durch** einen auf die Begrenzungssäule (81) aufgeschraubten Befestigungsknopf (82) mit einer außerhalb des Gehäuses (1) angeordneten Mutter, wobei
die bewegliche Position des Straffmechanismus relativ zu der Öffnung (16) durch Lösen und Festziehen des Befestigungsknopfes (82) eingestellt werden kann, um die Straffung zwischen dem Straffmechanismus und dem Gehäuse (1) zu verändern, so dass die Länge des aus dem Gehäuse (1) herausführenden Ausgangskabels (3) geändert werden kann, und
das Gehäuse (1) mit einer Trennwand (17) versehen ist, die entlang der Längsrichtung des Gehäuses (1) ausgebildet ist, wobei
die Trennwand (17) den Hohlraum des Gehäuses (1) in einen oberen Hohlraum und einen unteren Hohlraum unterteilt,
die Öffnung (16) in dem unteren Hohlraumabschnitt vorgesehen ist,
das Eingangskabel (2) sich von dem oberen Hohlraum zu dem anderen Ende des Gehäuses (1) erstreckt und mit dem Ausgangskabel (3) als Ganzes verbunden ist, und
ein gebogener Abschnitt des Ausgangskabels (3) an dem anderen Ende des Gehäuses (1), der mit dem Eingangskabel (2) verbunden ist, in der Endabdeckung (7) durch Anstoßen an das entsprechende Ende der Trennwand (17) befestigt ist.

2. Einziehbare Kabelmanagementvorrichtung nach Anspruch 1, wobei
das Eingangskabel (2) elektrisch mit der Begrenzungssäule (81) verbunden ist und das eine Ende des Ausgangskabels (3), das sich in dem Gehäuse (1) befindet, relativ zu dem anderen Ende des Gehäuses (1) nach Umgehung der Begrenzungssäule (81) fixiert ist; wobei
wenn der Befestigungsknopf (82) gelöst ist, der Straffmechanismus das umgebende Ausgangskabel (3) dazu bewegen kann, dass dieses sich entlang der Längsrichtung der Öffnung (16) bewegt, sodass die Länge des Ausgangskabels (3), das sich aus dem Gehäuse (1) heraus erstreckt, verändert wird, und
wenn der Befestigungsknopf (82) festgezogen ist, der Straffmechanismus relativ zur Öffnung (16) fixiert ist.

3. Einziehbare Kabelmanagementvorrichtung nach Anspruch 2, wobei
die Begrenzungssäule (81) einen ersten Abschnitt (811), der in dem Gehäuse (1) angeordnet ist, und einen zweiten Abschnitt (812) aufweist, der in der Öffnung (16) angeordnet ist,
die Querschnittsfläche des zweiten Abschnitts (812) kleiner ist als die Querschnittsfläche des ersten Abschnitts (811), sodass eine Stufe ausgebildet ist, und
eine Seitenfläche des zweiten Abschnitts (812) eine Ebene ist, die mit der Öffnung (16) in Kontakt steht.

4. Einziehbare Kabelmanagementvorrichtung nach Anspruch 3, wobei die Länge des zweiten Abschnitts (812) kleiner ist als die Dicke des Gehäuses (1) an der Öffnung (16), so dass beim Festziehen des Befestigungsknopfes (82) die Seitenwand der Öffnung (16) zwischen der gestuften Oberfläche der Stufe und der Mutter des Befestigungsknopfes (82) eingeklemmt wird.

5. Einziehbare Kabelmanagementvorrichtung nach Anspruch 3, wobei der Umfang des ersten Abschnitts (811) ferner eine Hülse (83) mit einer konkaven Umfangsfläche umfasst und das Ausgangskabel (3) um die konkave Fläche der Hülse (83) herum angeordnet ist.

6. Einziehbare Kabelmanagementvorrichtung nach Anspruch 5, wobei die Hülse (83) drehbar mit dem ersten Abschnitt (811) verbunden ist.

7. Einziehbare Kabelmanagementvorrichtung nach einem der vorhergehenden Ansprüche, wobei an der Endabdeckung (7) ein Magnetblock (91) vorgesehen ist und das Gehäuse (1) über den Magnetblock (91) an der Montagefläche befestigbar ist.

8. Einziehbare Kabelmanagementvorrichtung nach einem der vorhergehenden Ansprüche, wobei eine Kabelschnalle (92) auf das Ausgangskabel (3) aufgesteckt ist.

## Revendications

1. Un dispositif de gestion de câble rétractable, comprenant un boîtier en forme de bande (1) et un dispositif coulissant ; dans lequel
le boîtier (1) est pourvu d'une ouverture (16) formée dans le sens de la longueur du boîtier (1), un câble d'entrée (2) est prévu à une extrémité du boîtier (1), un câble de sortie (3) est prévu à l'autre extrémité du boîtier (1), et les deux extrémités du boîtier (1) sont pourvues de couvercles d'extrémité fermés (7) ; et
une extrémité du dispositif coulissant s'étend dans le boîtier (1) à travers l'ouverture (16) et est connectée électriquement au câble d'entrée (2) et au câble de sortie (3) ; dans lequel
le dispositif coulissant peut glisser le long de la direction de la longueur de l'ouverture (16) et la longueur d'extension du câble de sortie (3) par rapport au boîtier (1) change en conséquence pendant le glissement ;
dans lequel le dispositif coulissant est un mécanisme de serrage avec une extrémité insérée dans l'ouverture (16), l'autre extrémité exposée à l'extérieur du boîtier (1) et comprenant un montant de limite (81) qui peut se déplacer le long de la direction de la longueur de l'ouverture (16), **caractérisé par** un bouton de fixation (82) qui est fileté au montant de limite (81) et a un écrou situé à l'extérieur du boîtier (1), dans lequel
la position mobile du mécanisme de serrage par rapport à l'ouverture (16) peut être ajustée en desserrant et en serrant le bouton de fixation (82) pour modifier l'étanchéité fixe entre le mécanisme de serrage et le boîtier (1) de sorte que la longueur du câble de sortie (3) s'étendant hors du boîtier (1) peut être modifiée, et
le boîtier (1) est pourvu avec une paroi (17) formée le long de la direction de la longueur du boîtier (1),
la paroi (17) divise la cavité du boîtier (1) en une cavité supérieure et une cavité inférieure,
l'ouverture (16) est prévue dans la partie inférieure de la cavité,
le câble d'entrée (2) s'étend de la cavité supérieure à l'autre extrémité du boîtier (1) et est connecté au câble de sortie (3) dans son ensemble, et
une partie coudée du câble de sortie (3) à l'autre extrémité du boîtier (1) reliée au câble d'entrée (2) est fixée dans le couvercle d'extrémité (7) en butant contre l'extrémité correspondante de la paroi (17).

2. Le dispositif de gestion de câble rétractable selon la revendication 1, dans lequel
le câble d'entrée (2) est connecté électriquement au montant de limite (81) et l'une des extrémités du câble de sortie (3) située dans le boîtier (1) est fixée par rapport à l'autre extrémité du boîtier (1) après avoir contourné le montant de limite (81) ; dans lequel
lorsque le bouton de fixation (82) est desserré, le mécanisme de serrage peut entraîner le câble de sortie environnant (3) à se déplacer dans le sens de la longueur de l'ouverture (16) pour modifier la longueur du câble de sortie (3) s'étendant hors du boîtier (1), et
lorsque le bouton de fixation (82) est serré, le mécanisme de serrage est fixé par rapport à l'ouverture (16).

3. Le dispositif de gestion de câble rétractable selon la revendication 2, dans lequel le montant de limite (81) comprend une première section (811) située dans le boîtier (1) et une seconde section (812) située dans l'ouverture (16),
la section transversale de la deuxième section (812) est plus petite que la section transversale de la première section (811) pour former une marche, et
une surface latérale de la deuxième section (812) est un plan en contact avec l'ouverture (16).

4. Le dispositif de gestion de câble rétractable selon la revendication 3, dans lequel la longueur de la seconde section (812) est inférieure à l'épaisseur du boîtier (1) au niveau de l'ouverture (16), de sorte que lorsque le bouton de fixation (82) est serré, la paroi latérale de l'ouverture (16) est serrée entre la surface de la marche et l'écrou du bouton de fixation (82).

5. Le dispositif de gestion de câble rétractable selon la revendication 3, dans lequel la périphérie de la première section (811) comprend en outre un manchon (83) avec une surface périphérique concave, et le câble de sortie (3) est disposé autour de la surface concave du manchon (83).

6. Le dispositif de gestion de câble rétractable selon la revendication 5, dans lequel le manchon (83) est relié de manière rotative à la première section (811).

7. Le dispositif de gestion de câble rétractable selon l'une quelconque des revendications précédentes, dans lequel un bloc magnétique (91) est prévu sur le couvercle d'extrémité (7), et le boîtier (1) peut être fixé sur la surface à installer par l'intermédiaire du bloc magnétique (91).

8. Le dispositif de gestion de câble rétractable selon l'une quelconque des revendications précédentes, dans lequel une boucle de câble (92) est manchonnée sur le câble de sortie (3).
